Europäisches Patentamt

European Patent Office

Office européen des brevets

(11) Publication number: **0 041 166**
**A1**

## EUROPEAN PATENT APPLICATION

(21) Application number: **81103771.2**

(22) Date of filing: **16.05.81**

(51) Int. Cl.³: **G 09 B 15/02**

(30) Priority: **02.06.80 IT 2194580 U**

(43) Date of publication of application:
**09.12.81 Bulletin 81/49**

(84) Designated Contracting States:
**AT BE CH DE FR GB LI LU NL SE**

(71) Applicant: **DE LUCA, Ferdinando**
**Via Ariosto, 26**
**I-20145 Milano(IT)**

(72) Inventor: **DE LUCA, Ferdinando**
**Via Ariosto, 26**
**I-20145 Milano(IT)**

(74) Representative: **Modiano, Guido et al,**
**MODIANO & ASSOCIATI S.A.S. Via Meravigli, 16**
**I-20123 Milan(IT)**

(54) Didactical device for playing on musical instruments.

(57) A didactical device for playing on musical instruments comprises a first plate element (2) having a plurality of musical note identifying zones (3), a plurality of zones (5) having markings representative of the keys to be operated and a plurality of zones (12) provided with graphical symbols (13) designating the accord corresponding to the notes identified by the symbols (4). A second plate-like element (20) is further provided arranged to be movable with respect to the first plate-like element (2) and formed with a first collimating window (21) located within the zones (3), a sighting window (25) located over the zone carrying the corresponding markings (6), and a second sighting window located over the area (12) carrying the graphical symbol (13) identifying the corresponding accord.

Fig.2

EP 0 041 166 A1

This invention relates to a didactical device for playing on musical instruments.

As is known, it is mainly on toy musical instruments that are currently utilized color coded keys or elements which can be manipulated in accordance with a written musical text where the notes are designated with either dots or markings of the same colors as the keys to be depressed.

This currently used method enables even the smallest ones to perform melodies without any actual knowledge of music.

The method, while being suitable for toy musical instruments is not, of course, applicable, for a number of reasons, to traditional musical instruments.

Thus, it is a primary object of the invention to provide a didactical device which enables, beginners in particular, to readily locate the keys to be depressed in order to obtain a given musical accord.

A further object of this invention is to provide a didactical device which, within a small size, affords the representation of a high number of musical accords for effectuation also on different musical instruments.

It is another object of the invention to provide a didactical device which is extremely simple construction-wise, and can be referred to in an extremely convenient and ready way.

Yet another object of this invention is to provide a didactical device which can be easily made from materials and elements which are readily available commercially, and is of reduced cost. Such objects are achieved by the device as claimed.

Further features and advantages will become more apparent from the following detailed description of a didactical device for playing on musical instruments, as illustrated by way of example in the accompanying drawings, where:

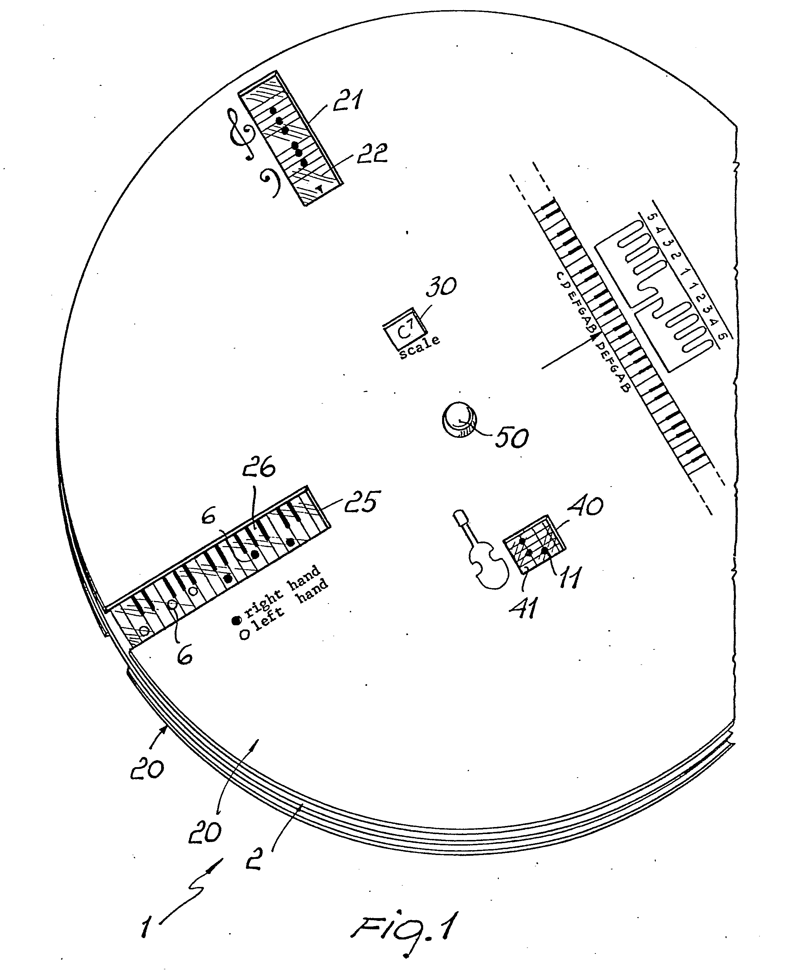

Figure 1 shows schematically and in perspective the device according to this invention;

Figure 2 is an exploded view of the device, evidencing the components thereof; and

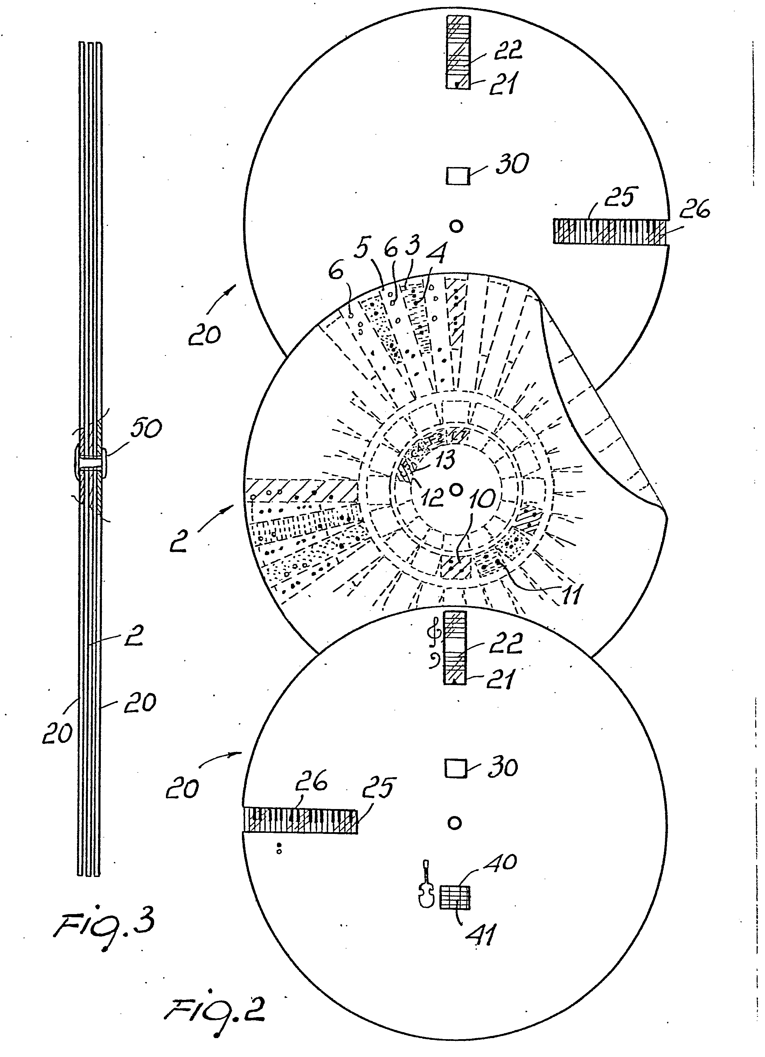

Figure 3 is a side view of the device.

With reference to the drawing figures, this didactical device for playing on musical instruments, which is generally indicated at 1, comprises a first plate-like element 2, which is of preference but not of necessity formed in a substantially circular configuration.

On either faces of said first plate-like element 2, there are provided a plurality of areas 3 having symbols 4 designating the musical notes, and a plurality of areas 5 having markings 6 designating the musical instrument keys to be operated.

Advantageously, the cited areas 3 and 5 are intercalated and arranged along a peripheral annulus of the faces of the plate-like element 2.

Concentrically to the areas 3 and 5, there are advantageously provided a further plurality of areas, indicated at 10, which have further markings 11 for playing on a different musical instrument, e.g. a guitar.

Internally to the areas 10 and concentrically thereto, there are provided a plurality of areas or zones 12 which carry graphical symbols 13 showing the accord corresponding to the musical notes designated by the symbols 4.

At either faces of the first plate-like element 2, there are overlaid two second plate-like elements, indicated at 20, which are provided with a first collimation window 21, preferably formed with lines 22 simulating a pentagraph, which is available at the areas 3 having symbols 4 corresponding to the various notes.

On the plate-like elements 20, there is correspondingly provided a sighting window 25 which carries a pattern or theme 26 simulating the keys of a piano and is located at an area or zone 5 carrying the markings corresponding to the keys to be operated.

Advantageously, said markings include first markings corresponding to the keys to be operated with the left hand, and second markings corresponding to the keys to be operated with the right hand.

Also on the second plate-like element 20, a second sighting window 30 is provided which is arranged at the areas 12 having graphical symbols 13 representative of the accord corresponding to the notes positioned at the first window 21.

On the plate-like element 20, there is provided a further sighting window 40, whereon lines 41 are provided which correspond to the cords of a guitar, which window is positioned at the areas 10 with the further markings 11 corresponding to the cords to be pinched to perform the cited accord on a guitar.

The second plate-like elements 20 are mutually movable relatively to the first plate-like element 2, thereby the first collimation window and second collimation window are brought on the accord and related musical notes to be performed. The coupling of the first plate-like element 2 and second plate-like elements 20, in the embodiment shown in the drawings, is accomplished by mutual rotation, and for this purpose, a central pivot pin 50 is provided which unites together the various plate-like elements, with mutual movement capabilities.

Of course, the same principle would remain unaffected where the relative movement between the second plate-like element 20 and first plate-like element 2, instead of being a rotary one, is a translatory one; in this case, however, the construction would change somewhat, and the plate-like element having the cited areas 3 and 5 could be given a rectangular configuration, with the second plate-like element in the form of a slide which can be translated to bring it to collimate with the musical accord to be performed.

It should be added to the foregoing that the visible surface of the second plate-like element 20 is preferably provided with illustrations or symbols representing the keyboard of a piano, musical notes, or other elements consistent with the intended use of the inventive device.

The use of the device according to this invention is apparent from the foregoing description: it will be sufficient for the user to bring the second collimation window 30 to the accord he/she wishes to perform, such that at the first window 21 there appear the markings which designate the piano keys or guitar chords to be operated in order to obtain that accord.

It should be further noted that, below the first window 21 and in radial alignment therewith, there may be provided an additional window for reading low notes, as correspondingly provided on the first plate-like element 2. Moreover, the areas or zones 12 may carry, in addition to the graphical symbol 13 of the accord, a reference numeral of the accord, thus simplifying the writing of harmonic sequences to be optionally applied on the plate-like element 20, which can be written, therefore, as a simple numerical succession.

It will be appreciated from the foregoing description that the invention achieves its objects, and in particular the fact is stressed herein that, within extremely reduced dimensions, it enables the inclusion of a very high number of musical accords of simple and quick readability.

In practicing the invention, the materials used, as well as the dimensions and contingent shapes, may be any ones to meet individual requirements.

## CLAIMS

1. A didactical device for playing on musical instruments, characterized in that it comprises at least one first plate-like element (2) having a plurality of areas (3) representing identification symbols (4) of musical notes, a plurality of areas (5) having markings representative of the keys of the musical instrument to be operated and a plurality of areas (12) having graphical symbols (13) designating the accord corresponding to the notes identified by said symbols (4), there being further provided at least one second plate-like element (20) arranged to be movable relatively to said first plate-like element (2) and formed with a first collimation window (21) located within said areas (3) carrying said symbols (4), a sighting window (25) located over the area carrying the corresponding markings (6), and a second sighting window (30) located over the area (12) carrying the graphical symbol (13) identifying the corresponding accord.

2. A didactical device according to Claim 1, characterized in that said first plate-like element (2) has a substantially circular configuration and said plurality of areas (3) carrying symbols (4) representative of musical notes and said plurality of areas (5) carrying markings (6) representative of the keys of the musical instrument to be operated, are intercalated and laid along an annulus.

3. A didactical device according to the preceding claims, characterized in that said plurality of areas (3) carrying symbols (4) representative of musical notes and said plurality of areas (5) carrying markings (6) representative of the keys of the musical instrument to be operated are provided on either faces of said first plate-like element (2).

4. A didactical device according to one or more of the preceding claims, characterized in that it comprises two of said second plate-like elements (20) arranged at either faces of said first plate-like element (2).

5. A didactical device according to one or more of the preceding claims, characterized in that at said first collimation window (21) there are provided lines (22) simulating a pentagraph.

6. A didactical device according to one or more of the preceding claims, characterized in that at said sighting window (25) there is provided a pattern or theme (26) simulating the keyboard of a piano.

7. A didactical device according to one or more of the preceding claims, characterized in that said markings (6) comprise first markings corresponding to the keys to be operated with the left hand and second markings corresponding to the keys to be operated with the right hand.

8. A didactical device according to one or more of the preceding claims, characterized in that it comprises, on said first plate-like element (2), a further plurality of areas (10) having further markings (11) representative of the chords of a guitar to be operated to perform the accord identified by said symbols (4), there being correspondingly provided on said second plate-like elements (20) a further sighting window (40) including lines (41) simulating the chords of a guitar.

9. A didactical device according to one or more of the preceding claims, characterized in that said second plate-like elements (20) can be rotated relatively to said first plate-like element (2), a central pivot pin (50) being provided to hold said plate-like elements (2,20) together and acting as a rotation axle therefor.

Fig.1

Fig.3

Fig.2

**0041166**

European Patent Office

**EUROPEAN SEARCH REPORT**

Application number

EP 81 10 3771

| | DOCUMENTS CONSIDERED TO BE RELEVANT | | CLASSIFICATION OF THE APPLICATION (Int. Cl.³) |
|---|---|---|---|
| Category | Citation of document with indication, where appropriate, of relevant passages | Relevant to claim | |
| | GB - A - 1 295 768 (S. BORRUSO)<br><br>* Claims; figures 1-22 *<br>--- | 1-9 | G 09 B 15/02 |
| | US - A - 3 472 117 (C.W. IVERSON)<br><br>* Abstract; figures 1-5 *<br>--- | 1-9 | |
| | US - A - 2 542 235 (M.L. CLOPTON)<br><br>* Column 1, lines 1-10; figures 1-5 * | 1-9 | |
| | ---------- | | **TECHNICAL FIELDS SEARCHED (Int. Cl.³)**<br><br>G 09 B 15/02<br>G 10 G 1/02<br>G 09 B 15/00 |
| | | | **CATEGORY OF CITED DOCUMENTS**<br><br>X: particularly relevant<br>A: technological background<br>O: non-written disclosure<br>P: intermediate document<br>T: theory or principle underlying the invention<br>E: conflicting application<br>D: document cited in the application<br>L: citation for other reasons<br><br>&: member of the same patent family, corresponding document |

| | | | |
|---|---|---|---|
| | The present search report has been drawn up for all claims | | |
| Place of search | Date of completion of the search | Examiner | |
| The Hague | 09.09.1981 | PELSERS | |

EPO Form 1503.1   06.78